# EUROPÄISCHE PATENTSCHRIFT

(11) **EP 3 941 025 B1**
(45) Veröffentlichungstag und Bekanntmachung des Hinweises auf die Patenterteilung: **20.08.2025**
(21) Anmeldenummer: 20186548.2
(22) Anmeldetag: 17.07.2020
(51) Int. Cl.: H04L 12/18, H04L 51/48, H04L 51/58, H04L 9/40

(54) **ÜBERTRAGUNG VON NACHRICHTEN IN EINER FUNKRUFANORDNUNG**
TRANSMISSION OF MESSAGES IN A RADIO COMMUNICATION SYSTEM
TRANSMISSION DE MESSAGES DANS UN AGENCEMENT DE RADIOMESSAGERIE

(43) Veröffentlichungstag der Anmeldung: 19.01.2022
(73) Patentinhaber: Swissphone Wireless AG, 8833 Samstagern (CH)
(72) Erfinder: ULRICH, Simon, 8733 Eschenbach (CH)
(74) Vertreter: E. Blum & Co. AG

(56) Entgegenhaltungen:
- EP-A2- 0 752 792
- US-A1- 2004 015 547
- US-A1- 2011 143 784

## Beschreibung

### Gebiet der Erfindung

Die Erfindung betrifft eine Funkrufanordnung zur Übertragung von Nachrichten, insbesondere von Alarmmeldungen, an Funkmeldeempfänger gemäss einem Funkrufprotokoll.

Weitere Aspekte der Erfindung betreffen ein Verfahren zur Übertragung von Nachrichten in einer Funkrufanordnung, einen Funkrufempfänger für eine Funkrufanordnung und eine Datenstruktur.

### Hintergrund

Funkrufanordnungen bzw. Funkrufnetze (Paging-Networks) sind bekannt. Sie dienen hauptsächlich zur Übermittlung von Alarm- bzw. Einsatzmitteilungen an Personen von Einsatzkräften, wie zum Beispiel Feuerwehren. Diese Personen tragen einen digitalen Meldeempfänger DME (Pager) auf sich, an welchen die Mitteilungen per Funk ausgesendet und auf dem Pager angezeigt werden. Bekannte Funkrufanordnungen können nach einem Funkrufprotokoll, z.B. dem POCSAG-Protokoll, arbeiten. Die Datenrate der Übermittlungen ist standardgemäss beschränkt.

In einigen Ländern, z.B. Deutschland, ist mittlerweile die Verschlüsselung von Nachrichten, welche über POCSAG (und im Fall von Hybridfähigen POCSAG/Mobilfunk Endgeräten auch über Mobilfunk) geschickt werden, üblich. Die dabei verwendeten Schlüssel sind Teil eines Verschlüsselungskonzepts, welches von der jeweiligen Einsatzorganisation, die die jeweilige Funkrufanordnung betreibt, kontrolliert wird. Dies trifft auch auf die Endgeräte (Pager) sowie die Alarmierungsinfrastruktur zu, welche in der Regel komplett ohne externe IT-Infrastruktur, z.B. Cloud-Computing, ausführbar sind.

Derartige Funkrufprotokolle, z.B. das POCSAG-Protokoll, können üblicherweise neben Tonrufen auch alphanumerische Nachrichten übertragen. Eine derartige alphanumerische Nachricht umfasst üblicherweise eine Funkrufadresse zur Adressierung der jeweiligen Einsatzmittel bzw. Einsatzkräfte sowie einen nachfolgenden Meldungsteil mit einem Meldungstext.

Der Meldungsteil mit dem Meldungstext wird dabei immer in Kombination mit einer Funkrufadresse gesendet. Das jeweilige Funkrufprotokoll spezifiziert in der Regel sowohl das Format der Funkrufadressen als auch das Format der alphanumerischen Nachrichten.

In der Regel ist eine individuelle Alarmierung mit einer dynamischen Gruppenbildung der Träger der Funkrufempfänger gewünscht.

Bei herkömmlichen digitalen Funkrufnetzen bzw. Funkrufempfängern kann die gewünschte Gruppenbildung und Meldungsübertragung dadurch erfolgen, dass an jedes Einsatzmittel bzw. jede Person bzw. jeden Funkrufempfänger einzeln jeweils die Alarmierung mit dem Text gesendet wird. Bei N Einsatzmitteln werden dabei N Textmeldungen mit mehreren POCSAG-Codeworten versandt. Dies ergibt entsprechend lange Alarmierungszeiten bzw. eine entsprechende Belastung des Funkrufnetzes mit N Aussendungen.

Es ist auch bekannt, zunächst nur eine Adressreihenfolge für TO-Alarme (Tone Only-Alarme) auszusenden, durch welche die gewünschten Einsatzmittel individuell durch eine im Funkrufempfänger gespeicherte Tonfolge und allenfalls einen zugehörigen Fixtext alarmiert werden, und nachfolgend eine Textmeldung zu senden, die auf einer allgemeinen Adresse nicht individuell bzw. von allen Pagern der Einsatzorganisation oder einer ganzen Region empfangen wird. Dies reduziert die Übertragungszeit für die Alarmierung, da zunächst nur N kurze Meldungen, nämlich nur N POCSAG-Adress-Codeworte (TO-Alarme) plus nur eine Textmeldung versandt werden müssen. Indes ist dieses Vorgehen störend für die nicht per TO-Alarm aufgebotenen Einsatzmittel, da diese bei Empfang der Textmeldung auch alarmiert werden und verifizieren müssen, ob sie nicht doch auch einen TO- Alarmruf erhalten haben.

Aus der DE 103 09 612 B4 ist ferner ein Rufbeschleunigungsverfahren bekannt, gemäss dem bei der Aussendung eine spezielle Alarmaussendung erfolgt, wobei der jeweilige Funkrufempfänger bzw. Alarmempfänger auf dafür vorgesehenen individuellen und allgemeinen Adressen angesprochen wird, wobei der Empfang der nichtindividuellen Nachricht im Funkrufempfänger bzw. Alarmempfänger keinen Alarm auslöst und diese Nachricht der oder den individuell empfangenen Meldung bzw. Meldungen zugeordnet wird, falls solche an den jeweiligen Funkrufempfänger bzw. Alarmempfänger gesandt worden sind.

Da die individuellen und allgemeinen Adressen z.B. gemäss dem POCSAG-Protokoll an eine bestimmte Framelage gebunden sind, kann sich ein Gruppenalarm über mehrere Codewortgruppen (Batches) erstrecken.

Die EP 0752792 A2 beschreibt ein Adressidentifikationssystem, um zu bestimmen, ob eine Datenübertragung, die den POCSAG-Funkrufübertragungsstandards entspricht, für einen bestimmten Datenempfänger oder eine Gruppe von Datenempfängern bestimmt ist. Dabei sind jedem Datenempfänger erste und zweite Empfängeradressen zugeordnet. Die ersten und zweiten Empfängeradressen können verwendet werden, um einen Datenempfänger eindeutig zu identifizieren oder um eine Gruppe von Datenempfängern zu identifizieren, zu der der Benutzer der Datenempfängervorrichtung gehört. Eine Datenübertragung an einen bestimmten Datenempfängerbenutzer innerhalb der Gruppe kann erfolgen, indem in das übertragene Adresswort und das erste Nachrichtenwort Adressinformationen aufgenommen werden, die einen bestimmten Benutzer innerhalb der Gruppe von Datenempfängerbenutzern identifizieren. Eine Datenübertragung an alle Datenempfänger in der Gruppe kann erfolgen, indem in das übertragene Adresswort und das erste Nachrichtenwort Adressinformationen aufgenommen werden, die allen Mitgliedern der Gruppe gemeinsam sind.

Die US 2004/015547 A1 beschreibt ein System zum Bereitstellen von Chat-Gruppendiensten für drahtlose mobile Endgeräte. Das System umfasst mehrere mobile Endgeräte, die jeweils in der Lage sind, eine Chat-Client-Anwendung auszuführen. Ein Serverkomplex ist über ein paketbasiertes Netzwerk wie das Internet mit einem oder mehreren drahtlosen Trägernetzwerken verbunden. Der Serverkomplex umfasst Serveranwendungen und Komponenten zum Unterstützen der Chatgruppendienste und zum Kommunizieren mit den Chatclients auf den mobilen Endgeräten.

Die US 2011/143784 beschreibt ein System zum Anzeigen mehrerer Zieladressen in einer Short Message Service ("SMS")-Nachricht. Eine Ausführungsform bezieht sich auf ein Verfahren, das den Empfang einer SMS-Nachricht von einem Absender umfasst, wobei die SMS-Nachricht eine Vielzahl von Empfängeradressen enthält, die eine Vielzahl von Empfängern identifizieren, die Erzeugung einer Zielnachricht der SMS-Nachricht für jeden der Vielzahl von Empfängern und die Übermittlung jeder der Zielnachrichten an einen jeweiligen Empfänger, wobei jede Zielnachricht eine Absenderadresse und die Zieladresse mindestens eines anderen Empfängers enthält.

### Darstellung der Erfindung

Ausführungsformen gemäss einem ersten Aspekt der Erfindung liegt daher die Aufgabe zu Grunde, eine Funkrufanordnung und ein Verfahren zur Übertragung von Nachrichten an Funkmeldeempfänger einer Funkrufanordnung zu schaffen, welches einen oder mehrere Nachteile der bekannten Anordnungen und Verfahren vermeidet.

Diese Aufgabe wird in einem ersten Aspekt der Erfindung von einer Funkrufanordnung gemäss Anspruch 1 gelöst.

Der erste Aspekt der Erfindung betrifft insbesondere eine Funkrufanordnung zur Übertragung von Nachrichten, insbesondere von Alarmmeldungen, von einer Funkrufzentrale an eine Mehrzahl von Funkmeldeempfängern gemäss einem Funkrufprotokoll. Das Funkrufprotokoll ist zur Sendung von alphanumerischen Nachrichten eines ersten Nachrichtenformats von der Funkrufzentrale an die Mehrzahl der Funkmeldeempfänger vorgesehen. Gemäss dem Funkrufprotokoll weist jede alphanumerische Nachricht des ersten Nachrichtenformats eine Funkrufadresse gemäss einem ersten Adresstyp und einen Meldungsteil mit einem Meldungstext auf. Die Funkrufanordnung ist dadurch gekennzeichnet, dass das Funkrufsystem zur Übertragung von alphanumerischen Nachrichten eines zweiten Nachrichtenformats konfiguriert ist. Die alphanumerischen Nachrichten des zweiten Nachrichtenformats weisen eine dedizierte Funkrufadresse des ersten Adresstyps, welche die alphanumerischen Nachrichten des zweiten Nachrichtenformats markiert, auf. Ausserdem weisen die alphanumerischen Nachrichten des zweiten Nachrichtenformats mehrere Funkrufadressen eines zweiten Adresstyps und einen gemeinsamem Meldungstext für die mehreren Funkrufadressen des zweiten Adresstyps auf. Die Funkrufanordnung ist dazu konfiguriert, die jeweilige alphanumerische Nachricht des zweiten Nachrichtenformats und den in der jeweiligen alphanumerischen Nachricht des zweiten Nachrichtenformats enthaltenen gemeinsamem Meldungstext in einer einzigen Aussendung an die mehreren Funkrufadressen des zweiten Adresstyps auszusenden.

Ein derartig ausgestaltetes Funkrufsystem ermöglicht eine schnelle, effiziente und kompakte Gruppenalarmierung. Zudem kann eine derartige Funkrufanordnung so ausgestaltet werden, dass sie kompatibel zu dem (bisherigen) Funkrufprotokoll betrieben werden kann, insbesondere zu dem POCSAG-Protokoll. Dadurch wird sichergestellt, dass auch Funkrufempfänger, die nicht oder noch nicht für dem Empfang von Nachrichten des zweiten Nachrichtenformats ausgerüstet sind, weiterhin in der Funkrufanordnung betrieben werden können. Derartige Funkrumempfänger können auch als Legacy-Funkrufempfänger bezeichnet werden. Eine derartige Kompatibilität ist insbesondere für Behörden und Organisationen mit Sicherheitsaufgaben (BOS) sehr wichtig.

Die Kompatibilität wird insbesondere dadurch erreicht, dass die alphanumerischen Nachrichten des zweiten Nachrichtenformats die Grundstruktur der Nachrichten des ersten Nachrichtenformats beibehalten. Namentlich weisen die Nachrichten des zweiten Nachrichtenformats auch weiterhin eine dedizierte Funkrufadresse des ersten Adresstyps, d.h. des von dem Funkrufprotokoll spezifizierten Formats auf. Diese dedizierte Funkrufadresse fungiert als Marker bzw. Tag und weist die Funkrufempfänger darauf hin, dass es sich bei der ausgesendeten alphanumerischen Nachricht um eine Nachricht des zweiten Nachrichtenformats handelt. Dementsprechend können Funkrufempfänger, die zum Empfang von alphanumerischen Nachrichten des zweiten Nachrichtenformats konfiguriert sind, die jeweilige Nachricht entsprechend verarbeiten und interpretieren. Die dedizierte Funkrufadresse des ersten Adresstyps stellt eine nichtindividuelle Adresse dar, welche gemäss Ausgestaltungen der Erfindung jeweils für eine Einsatzorganisation ausgewählt und gültig ist. Mit anderen Worten kann aber auch jeder Einsatzorganisation eine unterschiedliche dedizierte Funkrufadresse als Marker für die Nachrichten des zweiten Nachrichtentyps zugewiesen werden. Dementsprechend kann die dedizierte Funkrufadresse gemäss Ausgestaltungen auch als Marker-Adresse oder als Flag-Adresse bezeichnet werden.

Die alphanumerischen Nachrichten des zweiten Nachrichtenformats ermöglichen eine schnelle und effiziente Übermittlung eines gemeinsamen Meldungstextes bzw. einer gemeinsamen Textnachricht an eine Gruppe von Funkadressen des zweiten Adresstyps. Insbesondere können eine Vielzahl von Adressen des zweiten Adresstyps in einer gemeinsamen Codewortgruppe bzw. in einem gemeinsamen Batch oder aber auch in mehreren aufeinanderfolgenden Batches zusammen mit dem Meldungstext auf effiziente Weise ausgesandt werden.

Aus Sicht des Legacy-Funkprotokolls sind die Funkadressen des zweiten Adresstyps dabei in dem Meldungsteil der alphanumerischen Nachricht angeordnet. Mit anderen Worten nutzen Ausführungsformen der Erfindung den für die Payload bzw. den Nutzinhalt der alphanumerischen Nachrichten des ersten Nachrichtenformats vorgesehenen Bereich sowohl zur Übertragung von Adressen des zweiten Adresstyps als auch zur Übertragung eines gemeinsamen Meldungstextes, z.B. einer gemeinsamen Alarmmeldung, an mehrere Funkrufadressen.

Gemäss einer Ausführungsform der Erfindung ist der Meldungstext der alphanumerischen Nachrichten des zweiten Nachrichtentenformats verschlüsselt. Dies erhöht die Sicherheit der übermittelten Nachrichten, insbesondere im Hinblick auf den Datenschutz.

Gemäss einer weiteren Ausführungsform der Erfindung sind die Funkrufadressen des zweiten Adresstyps verschlüsselt.

Dies führt zu einer weiteren Verbesserung der Sicherheit der übermittelten Nachrichten, insbesondere im Hinblick auf den Datenschutz. Insbesondere wird dadurch verhindert, dass aus abgefangenen Adressdaten auf die Alarm- und Ausrückeordnung (AAO) der Organisation rückgeschlossen werden kann und dass dadurch Hinweise auf das korrespondierende Einsatzszenario gewonnen werden können.

Ein weiterer Vorteil von verschlüsselten Funkrufadressen besteht gegebenenfalls darin, dass Funkrufempfänger nicht in unbefugter Weise mit zusätzlichen bzw. fremden Funkrufadressen, z.B. fremden POCSAG Adressen, erweitert werden können.

Gemäss einer weiteren Ausführungsform der Erfindung sind die Funkrufempfänger dazu konfiguriert, einen Schlüsselsatz mit wenigstens einem nummerierten elektronischen Schlüssel der Funkrufanordnung zu speichern. Zudem weisen die alphanumerischen Nachrichten des zweiten Nachrichtenformats eine Schlüsselnummer des zur Entschlüsselung notwendigen elektronischen Schlüssels auf.

Dies ist eine effiziente Methode zur flexiblen Verwendung elektronischer Schlüssel.

Gemäss einer weiteren Ausführungsform der Erfindung ist die dedizierte Funkrufadresse mit einer Schlüsselnummer eines elektronischen Schlüssels verlinkt.

Dies ist eine weitere effiziente Methode, um den Funkrufempfängern die Entschlüsselung der Funkrufadressen des zweiten Adresstyps zu ermöglichen. Bei dieser Methode weiss der Funkrufempfänger anhand der dedizierten Funkrufadresse, welchen Schlüssel er zur Entschlüsselung der Funkrufadressen des zweiten Adresstyps und des Meldungstextes verwenden muss.

Gemäss einer weiteren Ausführungsform der Erfindung ist die Funkrufanordnung dazu konfiguriert, die Authentizität und/oder die Integrität des Meldungstextes und der Funkrufadressen des zweiten Adresstyps durch ein oder mehrere kryptographische Verfahren zu schützen. Gemäss einer Ausführungsform kann das kryptographische Verfahren als ein Signieren mittels einer digitalen Signatur ausgestaltet sein. Gemäss einer weiteren Ausführungsform kann das kryptographische Verfahren das Berechnen eines Nachrichtenauthentifizierungscodes umfassen, welcher der Nachricht hinzugefügt wird. Ein derartiger Nachrichtenauthentifizierungscode (englisch: Message Authentication Code (MAC)) dient dazu, die Authentizität und Integrität einer Nachricht zu überprüfen. MAC-Algorithmen berechnen aus den zu schützenden Daten und einem geheimen Schlüssel eine Prüfsumme, welcher als Message Authentication Code bezeichnet wird.

Gemäss einer weiteren Ausführungsform der Erfindung weist die alphanumerische Nachricht des zweiten Nachrichtentenformats Zusatzinformationen auf, wobei die Zusatzinformationen die Anzahl und/oder die Position der in der jeweiligen alphanumerischen Nachricht des zweiten Nachrichtentenformats enthaltenen Adressen des zweiten Adresstyps umfasst.

Gemäss einer weiteren Ausführungsform der Erfindung weisen die alphanumerischen Nachrichten des zweiten Nachrichtentenformats Sicherheitsinformationen auf. Die Sicherheitsinformationen umfassen insbesondere einen Initialisierungsvektor, eine digitale Signatur, einen Nachrichtenauthentifizierungscode (MAC), einen Schlüsselindex, einen Zeitstempel, eine Zufallszahl und/oder eine zyklische Redundanzprüfung.

Dadurch kann die Sicherheit der Datenübertragung erhöht werden.

Gemäss einer weiteren Ausführungsform der Erfindung weisen die alphanumerischen Nachrichten des zweiten Nachrichtentenformats Steuerinformationen auf. Die Steuerinformationen umfassen insbesondere eine Alarmierung mit einem Alarmton, eine stumme Alarmierung, eine Aktivierung eines Mobilfunk-Moduls, eine Aktivierung eines GPS-Moduls und / oder eine verkürzte Anzeige des Meldungstextes.

Die Sicherheitsinformationen und/oder die Zusatzinformationen und/oder die Steuerinformationen können insbesondere in einem Header der alphanumerischen Nachrichten des zweiten Nachrichtenformats positioniert werden.

Gemäss einer weiteren Ausführungsform der Erfindung werden die Nachrichten der Funkrufanordnung gemäss einem Zeitschlitzverfahren in vordefinierten Codewortgruppen oder mit anderen Worten in Batches übertragen. Jede Codewortgruppe bzw. jeder Batch weist dabei eine vordefinierte Anzahl von Rahmen bzw. Frames auf.

Gemäss einer weiteren Ausführungsform der Erfindung weisen die Codewortgruppen jeweils ein Synchronisations-Codewort und acht Frames mit jeweils zwei Codeworten auf. Dies entspricht der Struktur des POCSAG-Protokolls. Dabei weist der erste Frame die dedizierte Funkrufadresse des ersten Adresstyps und Headerinformationen auf. Der zweite Frame kann ebenfalls Headerinformationen aufweisen. In dem dritten bis achten Frame sind ein Adressteil und ein Meldungsteil vorgesehen. In dem Adressteil sind eine oder mehrere Funkrufadressen des zweiten Adresstyps vorgesehen und in dem Meldungsteil der gemeinsame Meldungstext für die Funkrufadressen des zweiten Adresstyps.

Gemäss einer weiteren Ausgestaltung der Erfindung ist vorgesehen, den ersten und den zweiten Frame mit der dedizierten Funkrufadresse des ersten Adresstyps und dem Header im Klartext zu senden und den dritten bis achten Frame in verschlüsselter Form.

Ein weiterer Aspekt der Erfindung betrifft ein Verfahren zur Übertragung von Nachrichten, insbesondere von Alarmmeldungen, von einer Funkrufzentrale an mehrere Funkmeldeempfänger einer Funkrufanordnung gemäss einem Funkrufprotokoll. Das Funkrufprotokoll ist zur Sendung von alphanumerischen Nachrichten eines ersten Nachrichtenformats vorgesehen. Jede alphanumerische Nachricht des ersten Nachrichtenformats weist eine Funkrufadresse gemäss einem ersten Adresstyp und einen Meldungsteil mit einem Meldungstext auf. Das Verfahren ist gekennzeichnet durch das Übertragen von alphanumerischen Nachrichten eines zweiten Nachrichtenformats. Die alphanumerischen Nachrichten des zweiten Nachrichtenformats weisen jeweils eine dedizierte Funkrufadresse des ersten Adresstyps auf. Die dedizierte Funkrufadresse des ersten Adresstyps markiert die alphanumerischen Nachrichten des zweiten Nachrichtenformats und hat somit die Funktion eines Markers oder Flags. Die alphanumerischen Nachrichten des zweiten Nachrichtenformats weisen ferner mehrere Funkrufadressen eines zweiten Adresstyps und einen gemeinsamen Meldungstext für die mehreren Funkrufadressen des zweiten Adresstyps auf. Gemäss dem Verfahren wird die jeweilige alphanumerische Nachricht des zweiten Nachrichtenformats und der in der jeweiligen alphanumerischen Nachricht des zweiten Nachrichtenformats enthaltene gemeinsame Meldungstext in einer einzigen Aussendung an die mehreren Funkrufadressen des zweiten Adresstyps ausgesendet.

Ein weiterer Aspekt der Erfindung betrifft einen Funkrufempfänger für eine derartige Funkrufanordnung.

Ein weiterer Aspekt der Erfindung betrifft eine computerimplementierte Datenstruktur zur Übertragung einer alphanumerischen Nachricht an Funkmeldeempfänger einer derartigen Funkrufanordnung gemäss einem Funkrufprotokoll. Die computerimplementierte Datenstruktur weist eine Präambel, ein Synchronisations-Codewort und acht Frames mit jeweils zwei Codeworten auf. Der erste Frame weist eine dedizierte Funkrufadresse eines ersten Adresstyps eines ersten Nachrichtenformats des Funkrufprotokolls auf. Die dedizierte Funkrufadresse markiert den Funkrufempfängern eine alphanumerische Nachricht eines zweiten Nachrichtenformats. Der erste und/oder der zweite und/oder weitere Frames weisen Headerinformationen auf. Die übrigen Frames, insbesondere der dritte bis achte Frame sind für Funkrufadressen eines zweiten Adresstyps und einen gemeinsamen Meldungstext für die Funkrufadressen des zweiten Adresstyps vorgesehen.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung von Ausführungsbeispielen anhand der Figuren. Dabei zeigt:
FIG. 1 grob schematisch ein Funkrufanordnung gemäss einer Ausführungsform der Erfindung;
FIG. 2a grob schematisch eine Funkrufzentrale gemäss einer Ausführungsform der Erfindung;
FIG. 2b grob schematisch einen Funkrufempfänger gemäss einer Ausführungsform der Erfindung;
FIG. 3 eine alphanumerische Nachricht eines ersten Nachrichtenformats;
FIG. 4 eine alphanumerische Nachricht eines zweiten Nachrichtenformats; und
FIG. 5 eine weitere alphanumerische Nachricht des zweiten Nachrichtenformats.

### Weg(e) zur Ausführung der Erfindung

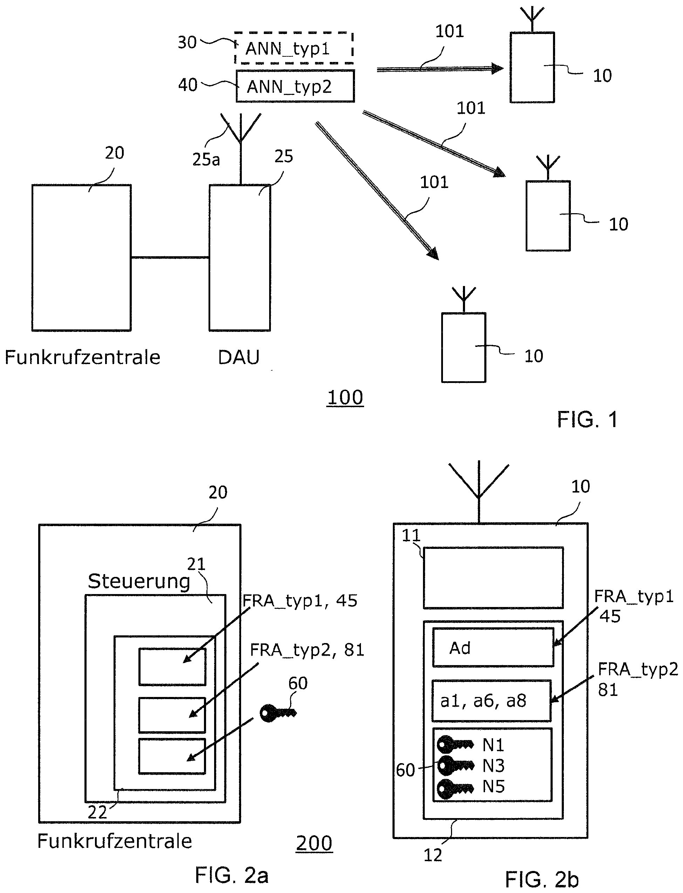

Figur 1 zeigt schematisch eine Funkrufanordnung 100 gemäss einer Ausführungsform der Erfindung. Die Funkrufanordnung 100 weist eine Funkrufzentrale 20 auf sowie eine Mehrzahl von Funkmeldeempfängern 10. Derartige Funkmeldeempfänger 10 werden vielfach auch als Pager bezeichnet.

Die Funkrufanordnung 100 ist zur Übertragung von Nachrichten, insbesondere von Alarmmeldungen, von der Funkrufzentrale 20 an die Funkmeldeempfänger 10 gemäss einem Funkrufprotokoll vorgesehen. Die Alarmmeldungen gehen z.B. bei der Funkrufzentrale 20, z.B. bei einer Einsatzleitstelle der Funkrufzentrale 20, ein, und werden von der Funkrufzentrale 20 mittels einer Basisstation 25, welche eine Antenne 25a umfasst, über eine drahtlose Datenverbindung 101 an die Funkrufempfänger 10 übertragen. Die Funkrufempfänger 10 sind den einzelnen Einsatzmitteln zugeordnet bzw. befinden sich bei den entsprechenden zu alarmierenden Personen.

Die Funkrufzentrale 20 ist über eine Datenverbindung, z.B. über eine Datenverbindung gemäss dem TCP/IP Protokoll, mit der Basisstation 25 verbunden. Diese Datenverbindung kann drahtgebunden ausgestaltet sein, zum Beispiel als Ethernet-Leitung, oder sie kann als drahtlose Datenverbindung ausgeführt sein. Die Funkrufanordnung 100 kann mehrere nicht näher dargestellte nachgeschaltete Funkbasisstationen aufweisen. Die FunkBasisstationen werden vielfach auch als Digitaler Alarmumsetzer (DAU) bezeichnet.

Natürlich ist in einem realen Funkrufnetz die Anzahl der Basisstationen und der Funkrufempfänger erheblich grösser. Da Funkrufnetze an sich bekannt sind, wird hier nicht weiter auf den detaillierten Aufbau des Funkrufnetzes eingegangen. Dieser ist dem Fachmann bekannt.

Die Funkrufanordnung 100 ist dazu konfiguriert, gemäss einem vordefinierten Funkrufprotokoll zu arbeiten, insbesondere gemäss dem POCSAG-Protokoll. Das vordefinierte Funkrufprotokoll ist zur Übertragung alphanumerischer Nachrichten 30 eines ersten Nachrichtenformats vorgesehen bzw. konzipiert. Diese alphanumerischen Nachrichten 30 des ersten Nachrichtenformats werden nachfolgend auch als ANN_typ 1 bezeichnet und sind somit insbesondere alphanumerische Nachrichten gemäss dem POCSAG-Protokoll. Diese alphanumerischen Nachrichten 30 des ersten Nachrichtenformats können somit auch als Legacy-Nachrichten bezeichnet werden.

Gemäss Ausführungsformen der Erfindung ist die Funkrufanordnung 100 zur Übertragung von alphanumerische Nachrichten 40 eines zweiten Nachrichtenformats konfiguriert. Das zweite Nachrichtenformat ist ein neues Nachrichtenformat, welches aber kompatibel mit dem vordefinierten Funkrufprotokoll ist, insbesondere mit dem POCSAG-Protokoll.

Die Nachrichten der Funkrufanordnung 100 werden bevorzugt gemäss einem Zeitschlitzverfahren in vordefinierten Codewortgruppen bzw. Batches übertragen.

Gemäss Ausführungsformen der Erfindung kann die Funkrufanordnung 100 sowohl dazu konfiguriert sein, alphanumerische Nachrichten 30 des ersten Nachrichtenformats als auch alphanumerische Nachrichten 40 des zweiten Nachrichtenformats auszusenden. Dies hat den Vorteil, dass damit auch Funkmeldeempfänger 10 erreicht werden können, welche (noch) nicht für den Empfang alphanumerischer Nachrichten 40 des zweiten (neuen) Nachrichtenformats ausgelegt sind.

Gemäss einer anderen Ausführungsform der Erfindung könnte die Funkrufanordnung 100 aber auch dazu konfiguriert sein, ausschliesslich alphanumerische Nachrichten 40 des zweiten Nachrichtenformats auszusenden. Dies könnte z.B. bei einer Funkrufanordnung angewendet werden, bei der alle Funkrufempfänger für den Empfang von alphanumerischen Nachrichten 40 des zweiten Nachrichtenformats geeignet bzw. konfiguriert sind. Die alphanumerischen Nachrichten 30 des ersten Nachrichtenformats sind in der FIG. 1 daher gestrichelt gezeichnet.

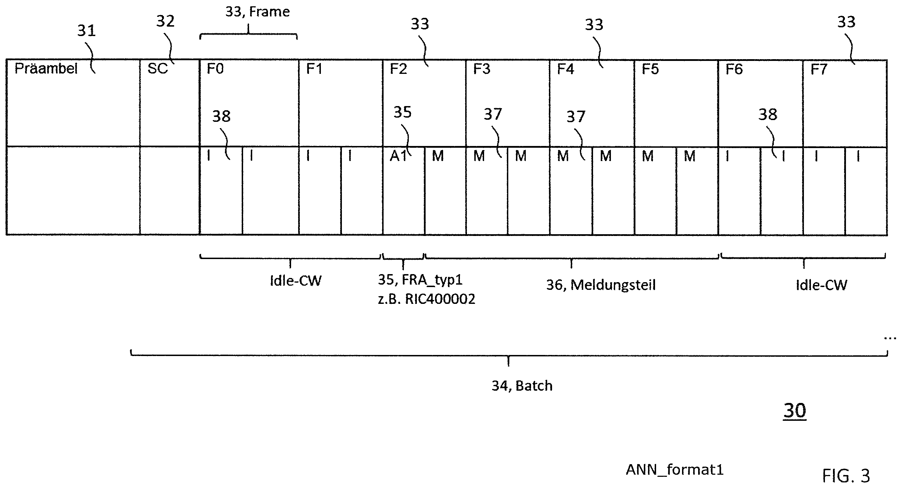

Die Figuren 2a und 2b zeigen ein etwas detaillierteres Blockschaltbild der Funkrufzentrale 20 und der Funkmeldeempfänger 10. Dies wird weiter unten noch näher erläutert. Zunächst werden in Bezug auf die Figuren 3, 4 und 5 die Formate der alphanumerischen Nachrichten des ersten und des zweiten Nachrichtentyps näher erläutert.

FIG. 3 zeigt den Aufbau einer alphanumerischen Nachricht 30 des ersten Nachrichtenformats. Die alphanumerische Nachricht 30 des ersten Nachrichtenformats kann insbesondere eine alphanumerische Nachricht sein, wie sie gemäss dem POCSAG-Protokoll vorgesehen ist. Die alphanumerische Nachricht 30 des ersten Nachrichtenformats wird nachfolgend und in der FIG. 3 auch als ANN_format 1 bezeichnet.

Die alphanumerische Nachricht 30 weist eine Präambel 31 auf. Die Präambel 31 ist generell eine Präambel des Funkrufprotokolls, insbesondere des POCSAG-Protokolls. Bei Ausführungsformen gemäss dem POCSAG-Protokoll besteht die Präambel daher aus 576 Bit. Die Präambel stellt den Beginn einer Aussendung bzw. einer Nachricht dar.

Die alphanumerische Nachricht 30 weist weiter ein Synchronisations-Codewort 32 auf. Bei Ausführungsformen gemäss dem POCSAG-Protokoll besteht das Synchronisations-Codewort 32 aus 32 Bit.

Die alphanumerische Nachricht 30 weist eine Codewortgruppe 34 oder mit anderen Worten einen Batch 34 mit einer vordefinierten Anzahl von Rahmen bzw. Frames 33 auf. Bei der Ausführungsform gemäss der FIG. 3 weist die Codewortgruppe 34 acht Frames 33 auf. Dies entspricht dem POCSAG-Protokoll. Die Codewortgruppe 34 umfasst neben den acht Frames 33 auch das Synchronisations-Codewort 32. Die acht Frames 33 sind mit F0, F1, F2, F3, F4, F5, F6 und F7 bezeichnet.

In der FIG. 3 weist die alphanumerische Nachricht 30 beispielhaft aus Gründen der vereinfachten Darstellung lediglich eine Codewortgruppe 34 auf. Die alphanumerischen Nachrichten 30 können aber generell eine Mehrzahl von Codewortgruppen 34 aufweisen, die jeweils am Anfang ein Synchronisations-Codewort 32 und danach acht Frames 33 aufweisen.

Die Frames 33 weisen jeweils zwei Codeworte auf. Gemäss dem Beispiel von FIG. 3 und entsprechend dem POCSAG Protokoll weisen die Frames 33 jeweils zwei Codeworte von jeweils 32 Bit auf.

In dem Beispiel der FIG. 3 weist die alphanumerische Nachricht 30 in dem dritten Frame F2, genauer gesagt als erstes Codewort des dritten Rahmens F2, eine Funkrufadresse 35, A1 eines ersten Adresstyps auf. Diese Funkrufadresse 35, A1 des ersten Adresstyps kann nachfolgend auch als FRA_typ 1 bezeichnet werden. Die Funkrufadresse 35, A1 des ersten Adresstyps stellt eine Funkrufadresse gemäss dem Funkrufprotokoll dar, gemäss dem die Funkrufanordnung 100 operiert. Diese Funkrufadresse FRA_typ 1 kann somit insbesondere eine Adresse gemäss dem POCSAG-Protokoll bzw. ein Adress-Codewort gemäss dem POCSAG-Protokoll sein. Ein Adress-Codewort gemäss dem POCSAG-Protokoll umfasst 32 Bit, bestehend aus einem Flag-Bit, 18 Adress-Bits, 2 Funktions-Bits, 10 Prüf-Bits und einem Parity-Bit.

Somit ist die Funkrufadresse FRA_typ 1 gemäss Ausführungsformen der Erfindung als Radio Identification Code (RIC), zu deutsch Funk-Identifikations-Nummer, ausgebildet. Eine derartige Funkidentifikationsnummer ist eine eindeutige Adressierung der Funkmeldeempfänger. Dabei kann die Zuweisung wahlweise für eine einzelne Person, für eine Gruppe von Personen oder auch fahrzeuggebunden erfolgen.

Eine Besonderheit der Funk-Identifikations-Nummern RIC gemäss dem POCSAG-Protokoll ist, dass diese Nummern in einem vordefinierten Frame der Codewortgruppe gesendet werden müssen. Genauer gesagt wird der Frame, *in dem die die* Funkrufadressen FRA_typ 1 des ersten Adresstyps gemäss POCSAG gesendet werden müssen, durch den Modulo 8-Wert der jeweiligen Funkidentifikationsnummer bestimmt. In dem Beispiel der FIG. 3 entspricht die Funkrufadresse FRA_typ 1 der Funk-Identifikations-Nummer 400002. Der Modulo 8 - Wert von 400002 ist 2 und somit muss die RIC 400002 im Frame F2 gesendet werden. Diese an die Framelage gebundene Übermittlung der Funk-Identifikations-Nummern gemäss POCSAG hat den Vorteil, dass dadurch Strom in den Funkmeldeempfängern eingespart wird. Zudem erweitert es die Anzahl der verfügbaren Adressen. Nach Empfang der Präambel 31 und des Synchronisations-Codewortes 32 weiss der jeweilige Funkempfänger, in welchem der Frames seine ihm zugeordneten Funk-Identifikations-Nummern liegen und er muss daher nur in diesen Frames bzw. vorzugsweise nur in einem der acht Frames "wach" bzw. auf Empfang sein, während er in den anderen Frames "schlafen" kann bzw. in einem Stromsparmodus betrieben werden kann. Dies kann man als Frameoptimierung zur Reduktion des Energieverbrauchs bezeichnen. Dabei wird bei der Programmierung der Funkmeldeempfänger bzw. bei der Zuordnung der RICs an die Funkmeldeempfänger vorzugsweise darauf geachtet, dass die dem jeweiligen Funkmeldeempfänger zugeordneten RICs möglichst die gleiche Framelage haben. Dies kann allerdings die Aussendung mehrerer Nachrichten für denselben Funkmeldeempfänger wesentlich verzögern.

Nach der Funkrufadresse 35, A1 des ersten Adresstyps folgt bei den alphanumerischen Nachrichten des ersten Nachrichtenformats ein Meldungsteil 36 mit einem Meldungstext 37. Der Meldungstext 37 besteht dabei aus einem oder aus mehreren aufeinanderfolgenden Meldungscodeworten M. In dem Beispiel der FIG. 3 besteht der Meldungsteil aus 7 Meldungscodeworten M, die in den Frames F2, F3, F4 und F5 gesendet werden. Die übrigen nicht genutzten Frames der alphanumerischen Nachricht 30 werden mit Idle-Codewörtern 38, I oder mit anderen Worten mit Leercodewörtern 38, I aufgefüllt.

In der FIG. 3 weist die alphanumerische Nachricht 30 beispielhaft aus Gründen der vereinfachten Darstellung lediglich eine Codewortgruppe 34 auf. Die alphanumerischen Nachrichten 30 können aber generell eine Mehrzahl von Codewortgruppen 34 aufweisen, die jeweils am Anfang ein Synchronisations-Codewort 32 und danach acht Frames 33 aufweisen. Dies ist in der FIG. 3 durch Punkte angedeutet.

Die Meldungscodeworte M können gemäss Ausführungsformen der Erfindung als Meldungscodeworte gemäss dem POCSAG-Standard ausgeführt sein und dementsprechend ebenfalls 32 Bit aufweisen, bestehend aus einem Flag-Bit, 20 Meldungs-Bits mit der eigentlichen Nachricht, 10 Prüf-Bits und einem Parity-Bit.

Da die alphanumerischen Nachrichten 30 wie oben beschrieben immer in Kombination mit einer Funkrufadresse des ersten Adresstyps gesendet werden, benötigt eine Aussendung einer alphanumerischen Nachricht des ersten Formats an eine Mehrzahl von Funkrufadressen des ersten Formats eine gewisse Zeit und umfasst typischerweise mehrere Codewortgruppen bzw. Batches. Zudem kann sich bei Funkrufadressen gemäss dem POCSAG-Protokoll durch die jeweilige Framelage der POCSAG-Adressen eine zusätzliche Verzögerung ergeben.

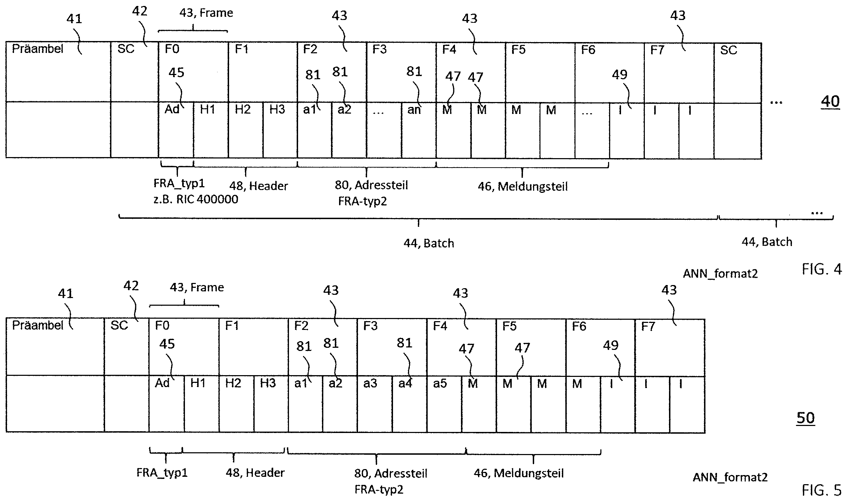

Gemäss Ausführungsformen der Erfindung ist ein weiteres Nachrichtenformat vorgesehen, welches in Bezug auf die FIG. 4 erläutert wird. Dieses ermöglicht insbesondere eine schnelle, effiziente und kompakte Gruppenalarmierung.

FIG. 4 zeigt eine alphanumerische Nachricht 40 eines zweiten Nachrichtenformats. Die alphanumerische Nachricht 40 des zweiten Nachrichtenformats wird nach folgend und in der FIG. 4 auch als ANN_format 2 bezeichnet.

Die alphanumerische Nachricht 40 weist ebenfalls eine Präambel 41 auf. Die Präambel 41 ist ebenfalls eine Präambel des Funkrufprotokolls, insbesondere des POCSAG-Protokolls, und ist somit vorzugsweise identisch mit der Präambel 31 der alphanumerischen Nachrichten 30 des ersten Nachrichtenformats. Bei Ausführungsformen gemäss dem POCSAG-Protokoll besteht die Präambel 41 daher ebenfalls aus 576 Bit. Die Präambel 41 stellt den Beginn einer Aussendung bzw. einer Nachricht des zweiten Nachrichtenformats dar.

Die alphanumerische Nachricht 40 weist ebenfalls ein Synchronisations-Codewort 42 auf, das dem Synchronisations-Codewort 32 entspricht. Bei Ausführungsformen gemäss dem POCSAG-Protokoll besteht das Synchronisations-Codewort 42 ebenfalls aus 32 Bit.

Die alphanumerische Nachricht 40 weist eine Codewortgruppe 44 oder mit anderen Worten einen Batch 44 mit einer vordefinierten Anzahl von Rahmen bzw. Frames 43 auf. Bei der Ausführungsform gemäss der FIG. 4 weist die Codewortgruppe 44 acht Frames 43 auf. Dies entspricht dem POCSAG-Protokoll. Die Codewortgruppe 44 umfasst neben den acht Frames 43 auch das Synchronisations-Codewort 42. Die acht Frames 43 sind wieder mit F0, F1, F2, F3, F4, F5, F6 und F7 bezeichnet.

In der FIG. 4 weist die alphanumerische Nachricht 40 beispielhaft aus Gründen der vereinfachten Darstellung lediglich eine Codewortgruppe 44 auf. Die alphanumerischen Nachrichten 40 können aber generell eine Mehrzahl von Codewortgruppen 44 aufweisen, die jeweils am Anfang ein Synchronisations-Codewort 42 und danach acht Frames 43 aufweisen. Dies ist in der FIG. 4 durch Punkte angedeutet.

Die Frames 43 weisen jeweils ein oder mehrere Codeworte auf. Gemäss dem Beispiel von FIG. 4 und entsprechend dem POCSAG Protokoll weisen die Frames 43 jeweils zwei Codeworte von jeweils 32 Bit auf.

Der grundlegende Aufbau bzw. die grundlegende Struktur der alphanumerischen Nachricht 40 des zweiten Nachrichtenformats entspricht somit dem grundlegenden Aufbau bzw. der grundlegenden Struktur der alphanumerischen Nachricht 30 des ersten Nachrichtenformats. Somit ist die alphanumerischen Nachricht 40 kompatibel mit demjenigen Funkrufprotokoll, für das die erste alphanumerische Nachricht konzipiert ist. Bei der Ausführungsform des Funkrufprotokolls als POCSAG-Protokoll ist die zweite alphanumerische Nachricht 40 somit kompatibel mit dem POCSAG-Protokoll.

Die alphanumerische Nachricht 40 gemäss der Figur 1 weist als erstes Codewort des ersten Frames F0 eine dedizierte Funkrufadresse Ad, 45 des ersten Adresstyps auf. Diese Funkrufadresse Ad, 45 des ersten Adresstyps kann nachfolgend auch als FRA_typ 1 bezeichnet werden. Die Funkrufadresse Ad, 45 des ersten Adresstyps stellt eine Funkrufadresse gemäss dem Funkrufprotokoll dar, gemäss dem die Funkrufanordnung 100 operiert. Diese Funkrufadresse FRA_typ 1 kann somit insbesondere eine Adresse gemäss dem POCSAG-Protokoll bzw. ein Adress-Codewort gemäss dem POCSAG-Protokoll sein.

Somit ist die Funkrufadresse FRA_typ 1 gemäss Ausführungsformen der Erfindung ebenfalls als Radio Identification Code (RIC), zu deutsch Funk-Identifikations-Nummer) ausgebildet.

In dem Beispiel der FIG. 4 entspricht die Funkrufadresse FRA_typ 1 der Funk-Identifikations-Nummer 400000. Der Modulo 8 Wert von 400000 ist 0 und somit muss die RIC 400000 gemäss dem POCSAG Funkrufprotokoll im Frame F0 gesendet werden. Die dedizierte Funkrufadresse Ad, 45 des zweiten Nachrichtenformats fungiert als Marker bzw. Flag für die Funkempfänger und markiert die Nachrichten des zweiten Nachrichtenformats. Mit anderen Worten, sobald ein Funkempfänger, der zum Empfang von Nachrichten des zweiten Nachrichtenformats konfiguriert ist, die dedizierte Funkrufadresse Ad, 45 erkennt, weiss er, dass es sich um eine Nachricht des zweiten Nachrichtenformats handelt. Die dedizierte Funkrufadresse Ad, 45 stellt somit eine allgemeine Funkrufadresse des ersten Adressformats dar und kann somit auch als nichtindividuelle Funkrufadresse bezeichnet werden. Die dedizierte Funkrufadresse Ad, 45 ist gemäss Ausführungsformen in jedem Funkrufempfänger gespeichert bzw. einprogrammiert, der für den Empfang von Nachrichten des zweiten Nachrichtenformats ausgelegt ist.

Gemäss dem in der FIG. 4 gezeigten Beispiel ist die dedizierte Funkrufadresse 45, Ad in dem ersten Frame F0 angeordnet. Dies hat den Vorteil, dass dadurch die Codewortgruppe 44 bzw. der Batch 44 in effizienter Weise ausgenutzt werden kann. Insbesondere können das zweite Codewort des ersten Frames F0 sowie alle weiteren Frames F1 bis F7 sowie weitere Frames der nachfolgenden Batches für Steuer- und Nutzinformationen des zweiten Nachrichtenformats genutzt werden. Allerdings ist anzumerken, dass gemäss anderen Ausführungsformen die dedizierte Funkrufadresse Ad, 45 auch in einem der anderen Rahmen/Frames platziert werden könnte.

Gemäss Ausführungsformen können alle Funkmeldeempfänger einer Einsatzorganisation, z.B. einer Feuerwehr, mit derselben dedizierten Funkrufadresse Ad, 45 des ersten Adresstyps ausgestattet sein. Gemäss weiteren Ausführungsformen kann es aber auch sinnvoll sein, für verschiedene Einsatzkräfte, z.B. für die Feuerwehr und den Rettungsdienst, unterschiedliche dedizierte Funkrufadressen Ad, 45 vorzusehen. Dies verhindert, dass Funkempfänger ausserhalb der jeweiligen Einsatzorganisation durch den Empfang der dedizierten Funkrufadresse Ad, 45 "geweckt" werden, wodurch deren Batterielebensdauer verlängert und ausserdem die Anzahl Funkrufadressen 81 um den Faktor Anzahl Ad 45 vervielfältigt werden können.

Nach der dedizierten Funkrufadresse Ad, 45 des ersten Adresstyps folgt bei den alphanumerischen Nachrichten 40 des zweiten Nachrichtenformats ein Header 48. Der Header 48 kann gemäss Ausführungsformen der Erfindung verschieden lang ausgeführt sein. Gemäss der in der FIG. 4 dargestellten Ausführungsform umfasst der Header 48 drei Codeworte H1, H2 und H3, welche in den Frames F0 und F1 angeordnet sind. Der Header 48 kann insbesondere Zusatzinformationen, Sicherheitsinformationen und/oder Steuerinformationen umfassen. Dies wird nachfolgend noch näher erläutert. Die Nachrichten 40 des zweiten Nachrichtenformats weisen nach dem Header 48 einen Adressteil 80 mit Funkrufadressen 81 eines zweiten Adresstyps auf. Die einzelnen Funkrufadressen 81 des zweiten Adresstyps bzw. die einzelnen Adresscodeworte der Funkrufadressen des zweiten Adresstyps sind mit a1, a2, ..., an bezeichnet. Die Anzahl der sich in einer alphanumerischen Nachricht des zweiten Nachrichtentyps befindlichen Funkrufadressen 81 des zweiten Adresstyps ist flexibel und kann sich von Nachricht zu Nachricht unterscheiden. Jede der Funkrufadressen 81 des zweiten Adresstyps ist als Codewort in einem der Frames 43 platziert. Dementsprechend nehmen die Funkrufadressen 81 des zweiten Adresstyps je nach Nachricht auch einen unterschiedlichen Raum in den alphanumerischen Nachrichten 40 des zweiten Nachrichtenformats ein. Nach dem Adressteil 80 mit den Funkrufadressen 81 des zweiten Adresstyps folgt ein Meldungsteil 46 mit einem gemeinsamen Meldungstext 47 für die Funkrufadressen 81 des zweiten Adressformats. Der Meldungstext 47 besteht dabei aus einem oder aus mehreren aufeinanderfolgenden Meldungscodeworten M**.** Die übrigen nicht genutzten Codewörter des letzten Batch 44 werden mit Idle-Codewörtern 49, I oder mit anderen Worten mit Leercodewörtern 49, I aufgefüllt.

Die Meldungscodeworte M der Nachricht 40 können gemäss Ausführungsformen der Erfindung ebenfalls als Meldungscodeworte gemäss dem POCSAG-Standard ausgeführt sein und dementsprechend ebenfalls 32 Bit aufweisen, bestehend aus einem Flag-Bit, 20 Meldungs-Bits mit der eigentlichen Nachricht, 10 Prüf-Bits und einem Parity-Bit.

Wie gesagt stellt der Meldungstext 47 einen gemeinsamen Meldungstext für die Gruppe der Funkrufadressen (a1, ..., an) dar. Somit können die in den Nachrichten 40 des zweiten Nachrichtenformats enthaltenen Textmeldungen in einer einzigen Aussendung an die in der jeweiligen Nachricht enthaltene Gruppe von Funkrufadressen 81 des zweiten Adressformats ausgesendet werden. Zudem sind die Funkrufadressen 81 des zweiten Adressformats nicht an eine bestimmte Framelage gebunden und können daher in sehr kompakter Weise unmittelbar nacheinander, genauer gesagt in aufeinanderfolgenden Codeworten einer Codewortgruppe, zusammen mit dem Meldungstext ausgesandt werden. Insofern ermöglich das Verfahren eine sehr schnelle und effiziente Alarmierung.

Aus Sicht des Legacy-Funkrufprotokolls der Funkrufanordnung 100, insbesondere aus Sicht des POCSAG-Protokolls, ist der Adressteil 80 des zweiten Nachrichtenformats mit den Funkrufadressen 81 des zweiten Adresstyps dabei in dem Meldungsteil der alphanumerischen Nachricht des ersten Nachrichtentyps angeordnet. Mit anderen Worten nutzen Ausführungsformen der Erfindung den für die Payload bzw. den Nutzinhalt der alphanumerischen Nachrichten 30 des ersten Nachrichtenformats vorgesehenen Bereich sowohl zur Übertragung von Adressen 81 des zweiten Adresstyps als auch zur Übertragung eines gemeinsamen Meldungstextes 47, z.B. einer gemeinsamen Alarmmeldung, an die Funkrufadressen 81 des zweiten Adresstyps.

Dies ermöglicht eine schnelle, effiziente und dynamische Gruppenalarmierung.

Gemäss dem POCSAG-Protokoll beginnt ein Adress-Codewort mit einem Flag Bit 0 und ein Meldungs- bzw- Message Codewort mit einem Flag Bit 1**.** Dadurch können die Funkrufempfänger Adress-Codeworte von Meldungs- bzw- Message Codeworten unterscheiden. Gemäss einer Ausgestaltung der Erfindung können die Funkrufadressen des zweiten Adresstyps ebenfalls als Message-Codeworte mit einem Flag-Bit 1 ausgestaltet werden, um sie von Funkrufadressen des ersten Adresstyps zu unterscheiden....

Gemäss einer bevorzugten Ausführungsform der Erfindung sind sowohl der Meldungsteil 46 mit dem Meldungstext 47 als auch der Adressteil 80 mit den Funkrufadressen 81 des zweiten Adresstyps verschlüsselt. Dadurch kann der Datenschutz und die Datensicherheit erhöht werden. Die Verschlüsselung der Funkrufadressen 81 des zweiten Adresstyps verhindert, dass aus dem Adressteil 80 Rückschlüsse auf die Alarm- und Ausrückeordnung (AAO) gewonnen werden können. Zudem können Funkmeldeempfänger nicht in unbefugter Weise mit zusätzlichen fremden bzw. nicht für den jeweiligen Melder autorisierten Funkrufadressen 81 erweitert werden. Dies bringt gegenüber einer ausschliesslichen Verschlüsselung des Meldungstextes einen deutlich erhöhten Sicherheitsgewinn.

Die Verschlüsselung der Funkrufadressen des zweiten Adresstyps wird insbesondere durch die innovative Struktur der Nachrichten des zweiten Nachrichtenformats ermöglicht, namentlich dadurch, dass die Nachrichten sowohl die dedizierte Funkrufadresse 45 des ersten Adresstyps als auch die Funkrufadressen 81 des zweiten Adresstyps aufweisen. Bei dieser dualen oder mit anderen Worten zweistufigen Adressierung übernimmt die dedizierte Funkrufadresse 45 die allgemeine bzw. nicht individuelle Adressierung gemäss dem zugrundeliegenden Funkrufprotokoll, insbesondere dem POCSAG-Protokoll, während die Funkrufadressen des zweiten Adresstyps die individuelle Adressierung einzelner Funkrufempfänger oder von Gruppen von Funkrufempfängern ermöglichen.

Die Verschlüsselung des Meldungstextes und die Verschlüsselung der Funkrufadressen des zweiten Adresstyps kann insbesondere mittels eines symmetrischen Verschlüsselungsverfahrens erfolgen. Gemäss Ausführungsformen der Erfindung kann das Verschlüsselungsverfahren z.B. auf dem International Data Encryption Algorithmus (IDEA), auf AES-128, auf AES-256 oder einem anderen Verfahren basieren. Beispielsweise ist auch eine Verschlüsselung mit dem BOSKrypt Verfahren möglich.

Bei der Ausführungsform mit verschlüsselten Funkrufadressen des zweiten Adresstyps kann die Entschlüsselung mittels einer Nummerierung der zur Verschlüsselung verwendeten elektronischen Schlüssel erreicht werden.

Dies wird nachfolgend anhand der Figuren 2a und 2b näher erläutert, welche eine detailliertere Ansicht der Funkrufzentrale 20 bzw. der Funkrufempfänger 10 zeigen.

Die Funkrufzentrale 20 weist eine zentrale Steuerungseinheit 21 auf, welche die Funkrufzentrale steuert. Die Steuerungseinheit 21 weist einen Speicher 22 auf, welcher nummerierte elektronische Schlüssel 60, eine oder mehrere dedizierte Funkrufadressen FRA_typ1, 45 des ersten Adresstyps und Funkrufadressen FRA_typ2, 81 des zweiten Adresstyps speichert bzw. verwaltet.

Die Funkrufzentrale 20 ist in den Figuren 1 und 2a in stark vereinfachter und schematischer Form dargestellt, um wesentliche Aspekte der Erfindung zu erläutern. Die Funkrufzentrale 20 kann insbesondere noch diverse weitere Komponenten umfassen, die in den Figuren 1 und 2a nicht dargestellt sind. So kann die Funkrufzentrale 20 z.B. einen Verschlüsselungsserver, einen Alarmserver, eine Eingabestelle, ein Gateway und/oder ein Leitsystem umfassen. Der Begriff Funkrufzentrale ist daher in einem weiteren Sinne zu verstehen und kann gemäss Ausführungsformen der Erfindung die gesamte vorgeschaltete IT-Infrastruktur bis zur Übergabe der Nachrichten 30, 40 an die entsprechende Funkbasisstation 25 umfassen. Insbesondere können einzelne Komponenten der Funkrufzentrale 20 auch an verschiedenen Orten angeordnet werden. So kann gemäss Ausführungsformen der Erfindung der Verschlüsselungsserver z.B. an einem anderen Ort als der Alarmserver und die Leitstelle lokalisiert sein.

Die zentrale Steuerungseinheit 21 kann sich zum Beispiel bei einer Einsatzleitzentrale des Dienstes befinden, dessen Angehörige über die Funkrufanordnung alarmiert werden sollen.

Fig. 2b zeigt ein etwas detaillierteres Blockschaltbild eines Funkrufempfängers 10. Der Funkrufempfänger 10 weist einen Prozessor 11 und einen Speicher 12 auf. Der Speicher 12 speichert eine oder mehrere dedizierte Funkrufadressen FRA_typ1, 45 des ersten Adresstyps. In diesem Beispiel speichert der Speicher nur eine dedizierte Funkrufadresse Ad des ersten Adresstyps, z.B. die RIC Adresse 400000. Zudem sind in dem Speicher 12 eine oder mehrerer Funkrufadressen FRA_typ2, 81 des zweiten Adresstyps abgelegt, in diesem Beispiel die Adressen a1, a6 und a8, welche keine RIC-Adressen sind. Zudem speichert der Speicher 12 nummerierte elektronische Schlüssel 60, in diesem Fall elektronische Schlüssel mit den Schlüsselnummern N1, N3 und N5. Die elektronischen Schlüssel N1, N3 und N5 bilden in diesem Beispiel einen individuellen Schlüsselsatz des Funkempfängers 10.

Selbstverständlich weist ein realer Funkrufempfänger noch weitere nicht näher dargestellte Komponenten auf wie ein mit der Antenne 25a gekoppeltes Empfangsteil, einen Decoder, eine Eingabeeinheit, eine alphanumerische Anzeige sowie einen akustischen Alarmgeber. Derartige Komponenten sind dem Fachmann bekannt und werden daher nicht näher erläutert.

Wie oben beschrieben können sowohl der Meldungsteil 46 mit dem Meldungstext 47 als auch der Adressteil 80 mit den Funkrufadressen 81 des zweiten Adressformats verschlüsselt sein. Um diese Nachrichten entschlüsseln zu können, weisen gemäss einer Ausführungsform der Erfindung die alphanumerischen Nachrichten 40 des zweiten Nachrichtenformats eine Schlüsselnummer des zur Entschlüsselung notwendigen elektronischen Schlüssels 60 auf, d.h. z.B. die Schlüsselnummer N1, zu welcher der korrespondierende Schlüssel in dem Funkempfänger 10 der FIG. 2b gespeichert ist. Diese Schlüsselnummer kann insbesondere in dem Header 48 der Nachricht 40 des zweiten Nachrichtenformats übertragen werden.

Gemäss einer anderen Ausführungsform der Erfindung kann die dedizierte Funkrufadresse, z.B. die Adresse Ad= RIC 400000 mit einer bestimmten Schlüsselnummer verlinkt sein, z.B. mit der Schlüsselnummer N1. In beiden Fällen können die Funkempfänger 10 somit nach Empfang einer alphanumerischen Nachricht 40 überprüfen, ob sie den zur Entschlüsselung des Meldungstextes und der Funkrufadresse erforderlichen Schlüssel 60 in ihrem Speicher 12 abgelegt haben.

Der in der FIG. 4 dargestellte Header 48 der alphanumerischen Nachricht 40 des zweiten Nachrichtentenformats kann weitere Zusatzinformationen für die Funkrufempfänger 10 beinhalten.

Eine derartige Zusatzinformation kann insbesondere die Anzahl und/oder die Position der in der jeweiligen alphanumerischen Nachricht des zweiten Nachrichtentenformats enthaltenen Adressen 81 des zweiten Adresstyps umfassen. Dies ermöglicht dem Funkempfänger 10 die Verarbeitung der empfangenen alphanumerischen Nachricht, insbesondere die Unterscheidung der Funkrufadressen 81 des zweiten Adresstyps von dem Meldungstext M, 47.

Gemäss anderen Ausführungsformen kann diese Unterscheidung jedoch auch auf andere Weise ermöglicht werden, z.B. durch unterschiedliche Flag-Bits der Codeworte M des Meldungstextes und der Codeworte ai der Funkrufadressen des zweiten Adresstyps.

Der Header 48 kann zudem Sicherheitsinformationen für den Schutz der Vertraulichkeit, Integrität und Authentizität der Funkrufadressen 81 und des Meldungstextes 47 umfassen. Diese Sicherheitsinformationen können z.B. einen Initialisierungsvektor, eine digitale Signatur, einen Nachrichtenauthentifizierungscode (MAC), einen Schlüsselindex und/oder einen Zeitstempel umfassen.

Der Initialisierungsvektor bewirkt, dass jede Nachricht individuell ist. Die digitale Signatur oder der Nachrichtenauthentifizierungscode kann die Integrität und Authentizität der Meldung garantieren. Der Schlüsselindex kann eine Schlüsselnummer des jeweils zur Verschlüsselung verwendeten Schlüssels umfassen. Der Zeitstempel kann beispielsweise vor einer Wiedereinspeisung einer Nachricht in die Funkrufanordnung schützen.

Der Header 48 kann zudem Steuerinformationen beinhalten zur Steuerung des Verhaltens des Funkmeldeempfängers bei der Alarmierung. Diese Steuerinformationen können z.B. eine Alarmierung mit einem bestimmten Alarmton, eine stumme Alarmierung, die Aktivierung eines Mobilfunk-Moduls des Funkmeldeempfängers und/oder eines GPS-Moduls des Funkmeldeempfängers und/oder eine verkürzte Anzeige des Texts beinhalten bzw. bewirken.

Nach einer empfangenen Präambel 31 bzw. 41 suchen die Funkmeldeempfänger 10 in den Frames 33 bzw. 43 nach einem Adresscodewort. Wird eine in dem Funkrufempfänger 10 gespeicherte dedizierte Funkrufadresse Ad empfangen, bleibt der Funkrufempfänger 10 auf Empfang und wertet den Header 48 aus. Die Headerinformationen können dann zur weiteren Verarbeitung der empfangenen Nachricht genutzt werden, insbesondere zur Entschlüsselung der Funkrufadressen des zweiten Adresstyps und des Meldungstextes.

FIG. 5 zeigt ein konkretes Beispiel einer alphanumerischen Nachricht 50 des zweiten Nachrichtenformats. In dem Beispiel der FIG. 5 weist der Adressteil 80 fünf Funkrufadressen des zweiten Adresstyps auf, namentlich die Adressen bzw. Adresscodeworte a1, a2, a3, a4 und a5. Der Meldungsteil 46 weist 4 Meldungscodeworte M auf. Danach folgen noch drei Idle-Codeworte I.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der folgenden Ansprüche ausgeführt werden kann.

## Patentansprüche

1. Funkrufanordnung (100) zur Übertragung von Nachrichten von einer Funkrufzentrale an eine Mehrzahl von Funkmeldeempfängern (10) gemäss einem Funkrufprotokoll, z.B. dem POCSAG-Protokoll, wobei
das Funkrufprotokoll zur Sendung von alphanumerischen Nachrichten (30) eines ersten Nachrichtenformats vorgesehen ist; und
jede alphanumerische Nachricht (30) des ersten Nachrichtenformats eine Funkrufadresse (35) gemäss einem ersten Adresstyp und einen Meldungsteil (36) mit einem Meldungstext aufweist;
**dadurch gekennzeichnet, dass**
die Funkrufanordnung (100) zur Übertragung von alphanumerischen Nachrichten (40, 50) eines zweiten Nachrichtenformats von der Funkrufzentrale an die Mehrzahl der Funkmeldeempfänger konfiguriert ist, wobei die alphanumerischen Nachrichten (40, 50) des zweiten Nachrichtenformats aufweisen:
eine dedizierte Funkrufadresse (45) des ersten Adresstyps des von dem Funkrufprotokoll spezifizierten ersten Nachrichtenformats, welche als Markeradresse die alphanumerischen Nachrichten (40, 50) des zweiten Nachrichtenformats für die Funkmeldeempfänger markiert;
mehrere Funkrufadressen (81) eines zweiten Adresstyps; und
einen gemeinsamen Meldungstext (47) für die mehreren Funkrufadressen (81) des zweiten Adresstyps,
wobei die dedizierte Funkrufadresse des ersten Adresstyps und die mehreren Funkrufadressen des zweiten Adresstyps aus Sicht des Funkrufprotokolls in dem Meldungsteil der alphanumerischen Nachrichten des ersten Nachrichtenformats angeordnet sind, und
wobei die Funkrufanordnung dazu konfiguriert ist, die jeweilige alphanumerische Nachricht des zweiten Nachrichtenformats und den in der jeweiligen alphanumerischen Nachricht des zweiten Nachrichtenformats enthaltenen gemeinsamem Meldungstext für eine Gruppenadressierung in einer einzigen Aussendung an die mehreren Funkrufadressen des zweiten Adresstyps auszusenden.

2. Funkrufanordnung nach Anspruch 1, **dadurch gekennzeichnet, dass**
das Funkrufprotokoll das POCSAG-Protokoll ist; und
die dedizierte Funkrufadresse (45) des ersten Adresstyps ein Adress-Codewort gemäss dem POCSAG-Protokoll ist.

3. Funkrufanordnung nach einem der vorhergehenden Ansprüche, **dadurch gekennzeichnet, dass** die Funkrufanordnung (100) dazu konfiguriert ist, den Meldungstext (47) der alphanumerischen Nachrichten (40, 50) des zweiten Nachrichtenformats zu verschlüsseln.

4. Funkrufanordnung nach einem der vorhergehenden Ansprüche, **dadurch gekennzeichnet, dass** die Funkrufanordnung (100) dazu konfiguriert ist, die Funkrufadressen (81) des zweiten Adresstyps zu verschlüsseln.

5. Funkrufanordnung nach Anspruch 4, **dadurch gekennzeichnet, dass**
die Funkrufempfänger (10) dazu konfiguriert sind, einen Schlüsselsatz mit einem oder mehreren nummerierten elektronischen Schlüsseln (60) der Funkrufanordnung zu speichern; und
dass die alphanumerischen Nachrichten (40, 50) des zweiten Nachrichtenformats eine Schlüsselnummer des zur Entschlüsselung notwendigen elektronischen Schlüssels (60) umfassen.

6. Funkrufanordnung nach Anspruch 4, **dadurch gekennzeichnet, dass** die dedizierte Funkrufadresse (45) des ersten Adresstyps mit einer Schlüsselnummer des zur Entschlüsselung notwendigen elektronischen Schlüssels (60) verlinkt ist.

7. Funkrufanordnung nach einem der vorhergehenden Ansprüche, **dadurch gekennzeichnet, dass** die Funkrufanordnung (100) dazu konfiguriert ist, die Authentizität und/oder die Integrität des Meldungstextes und der Funkrufadressen des zweiten Adresstyps durch ein oder mehrere kryptographische Verfahren zu schützen.

8. Funkrufanordnung nach einem der vorhergehenden Ansprüche, **dadurch gekennzeichnet, dass** die alphanumerischen Nachrichten (40, 50) des zweiten Nachrichtentenformats Zusatzinformationen aufweisen, wobei die Zusatzinformationen die Anzahl und/oder die Position der in der jeweiligen alphanumerischen Nachricht (40, 50) des zweiten Nachrichtentenformats enthaltenen Funkrufadressen (81)des zweiten Adresstyps umfasst.

9. Funkrufanordnung nach einem der vorhergehenden Ansprüche, **dadurch gekennzeichnet, dass** die alphanumerischen Nachrichten (40, 50) des zweiten Nachrichtentenformats Sicherheitsinformationen aufweisen, wobei die Sicherheitsformationen umfassen
einen Initialisierungsvektor;
eine digitale Signatur;
einen Nachrichtenauthentifizierungscode (MAC);
einen Schlüsselindex; und/oder
einen Zeitstempel.

10. Funkrufanordnung nach einem der vorhergehenden Ansprüche, **dadurch gekennzeichnet, dass** die alphanumerischen Nachrichten (40, 50) des zweiten Nachrichtentenformats Steuerinformationen aufweisen, wobei die Steuerinformationen umfassen:
eine Alarmierung mit einem Alarmton;
eine stumme Alarmierung;
eine Aktivierung eines Mobilfunk-Moduls;
eine Aktivierung eines GPS-Moduls; und / oder
eine verkürzte Anzeige des Meldungstextes.

11. Funkrufanordnung nach einem der vorhergehenden Ansprüche 8 bis 10, **dadurch gekennzeichnet,**
**dass** die alphanumerischen Nachrichten (40, 50) des zweiten Nachrichtentenformats einen Header (48) aufweisen, welcher die Zusatzinformationen, Sicherheitsinformationen und/oder die Steuerinformationen enthält.

12. Funkrufanordnung nach einem der vorhergehenden Ansprüche, **dadurch gekennzeichnet, dass**
die Nachrichten (30, 40, 50) der Funkrufanordnung (100) gemäss einem Zeitschlitzverfahren in vordefinierten Codewortgruppen (34, 44) übertragen werden, wobei jede Codewortgruppe (34, 44) eine vordefinierte Anzahl von Frames (43, 33) aufweist, wobei
die Codewortgruppen (44) der Nachrichten des zweiten Nachrichtenformats aufweisen:
ein Synchronisations-Codewort (42);
acht Frames (43) mit jeweils zwei Codeworten;
wobei
der erste Frame (F0) die dedizierte Funkrufadresse (45) des ersten Adresstyps und Headerinformationen (H1) aufweist;
der zweite Frame (F1) Headerinformationen (H2, H3) aufweist; und
der dritte bis achte Frame (F2-F7) für die Funkrufadressen (81) des zweiten Adresstyps und den gemeinsamen Meldungstext (47) für die Funkrufadressen des zweiten Adresstyps vorgesehen sind.

13. Funkrufanordnung nach Anspruch 12, **dadurch gekennzeichnet, dass** die Funkrufanordnung dazu konfiguriert ist, den ersten und den zweiten Frame (F0, F1) im Klartext zu senden und den dritten bis achten Frame (F2-F7) in verschlüsselter Form zu senden.

14. Verfahren zur Übertragung von Nachrichten von einer Funkrufzentrale an mehrere Funkmeldeempfänger einer Funkrufanordnung gemäss einem Funkrufprotokoll, wobei
das Funkrufprotokoll zur Sendung von alphanumerischen Nachrichten eines ersten Nachrichtenformats vorgesehen ist; und
jede alphanumerische Nachricht des ersten Nachrichtenformats eine Funkrufadresse gemäss einem ersten Adresstyp und einen Meldungsteil mit einem Meldungstext aufweist;
**gekennzeichnet durch** den Schritt:
Übertragung von alphanumerischen Nachrichten eines zweiten Nachrichtenformats, wobei die alphanumerischen Nachrichten des zweiten Nachrichtenformats aufweisen:
eine dedizierte Funkrufadresse des ersten Adresstyps, welche die alphanumerischen Nachrichten des zweiten Nachrichtenformats markiert;
mehrere Funkrufadressen eines zweiten Adresstyps; und
einen gemeinsamen Meldungstext für die mehreren Funkrufadressen des zweiten Adresstyps; wobei die jeweilige alphanumerische Nachricht des zweiten Nachrichtenformats und der in der jeweiligen alphanumerischen Nachricht des zweiten Nachrichtenformats enthaltene gemeinsamem Meldungstext in einer einzigen Aussendung an die mehreren Funkrufadressen des zweiten Adresstyps ausgesendet wird.

15. Funkmeldeempfänger zum Empfang von Nachrichten von Alarmmeldungen, von einer Funkrufzentrale gemäss einem Funkrufprotokoll, wobei
das Funkrufprotokoll zur Sendung von alphanumerischen Nachrichten eines ersten Nachrichtenformats vorgesehen ist; und
jede alphanumerische Nachricht des ersten Nachrichtenformats eine Funkrufadresse gemäss einem ersten Adresstyp und einen Meldungsteil mit einem Meldungstext aufweist;
**dadurch gekennzeichnet, dass**
der Funkmeldeempfänger zum Empfang von alphanumerischen Nachrichten eines zweiten Nachrichtenformats konfiguriert ist, wobei die alphanumerischen Nachrichten des zweiten Nachrichtenformats aufweisen:
eine dedizierte Funkrufadresse des ersten Adresstyps, welche die alphanumerischen Nachrichten des zweiten Nachrichtenformats markiert;
mehrere Funkrufadressen eines zweiten Adresstyps; und
einen gemeinsamen Meldungstext für die mehreren Funkrufadressen des zweiten Adresstyps, wobei die Funkrufanordnung dazu konfiguriert ist, die jeweilige alphanumerische Nachricht des zweiten Nachrichtenformats und den in der jeweiligen alphanumerischen Nachricht des zweiten Nachrichtenformats enthaltenen gemeinsamem Meldungstext in einer einzigen Aussendung an die mehreren Funkrufadressen des zweiten Adresstyps auszusenden.

## Claims

1. Paging arrangement (100) for transmitting messages from a paging center to a plurality of paging receivers (10) according to a paging protocol, e.g. the POCSAG protocol, wherein
the paging protocol is provided for transmitting alphanumeric messages (30) of a first message format; and
each alphanumeric message (30) of the first message format comprises a paging address (35) according to a first address type and a message part (36) with a message text;
**characterized in that**
the paging arrangement (100) is configured to transmit alphanumeric messages (40, 50) of a second message format from the paging center to the plurality of paging receivers, wherein the alphanumeric messages (40, 50) of the second message format comprise
a dedicated paging address (45) of the first address type of the first message format specified by the paging protocol, which marks as a marker address the alphanumeric messages (40, 50) of the second message format for the paging receivers;
a plurality of paging addresses (81) of a second address type; and
a common message text (47) for the plurality of paging addresses (81) of the second address type,
wherein the dedicated paging address of the first address type and the plurality of paging addresses of the second address type are arranged in the message part of the alphanumeric messages of the first message format as viewed by the paging protocol, and
wherein the paging arrangement is configured to transmit the respective alphanumeric message of the second message format and the common message text contained in the respective alphanumeric message of the second message format for a group addressing in a single transmission to the plurality of paging addresses of the second address type.

2. Paging arrangement according to claim 1, **characterized in that**
the paging protocol is the POCSAG protocol; and
the dedicated paging address (45) of the first address type is an address code word according to the POCSAG protocol.

3. Paging arrangement according to anyone of the preceding claims, **characterized in that** the paging arrangement (100) is configured to encrypt the message text (47) of the alphanumeric messages (40, 50) of the second message format.

4. Paging arrangement according to anyone of the preceding claims, **characterized in that** the paging arrangement (100) is configured to encrypt the paging addresses (81) of the second address type.

5. Paging arrangement according to claim 4, **characterized in that**
the paging receivers (10) are configured to store a key set comprising one or more numbered electronic keys (60) of the paging arrangement; and
that the alphanumeric messages (40, 50) of the second message format comprise a key number of the electronic key (60) required for decryption.

6. Paging arrangement according to claim 4, **characterized in that** the dedicated paging address (45) of the first address type is linked to a key number of the electronic key (60) required for decryption.

7. Paging arrangement according to anyone of the preceding claims, **characterized in that** the paging arrangement (100) is configured to protect the authenticity and/or the integrity of the message text and the paging addresses of the second address type by one or more cryptographic methods.

8. Paging arrangement according to anyone of the preceding claims, **characterized in that** the alphanumeric messages (40, 50) of the second message format comprise additional information, wherein the additional information comprises the number and/or the position of the paging addresses (81) of the second address type contained in the respective alphanumeric message (40, 50) of the second message type format.

9. Paging arrangement according to anyone of the preceding claims, **characterized in that** the alphanumeric messages (40, 50) of the second message format comprise security information, wherein the security information comprises
an initialization vector;
a digital signature;
a message authentication code (MAC);
a key index; and/or
a timestamp.

10. Paging arrangement according to anyone of the preceding claims, **characterized in that** the alphanumeric messages (40, 50) of the second message format comprise control information, wherein the control information comprises:
an alert with an alert tone;
a silent alert;
an activation of a cellular module
an activation of a GPS module; and/or
an abbreviated display of the message text.

11. Paging arrangement according to anyone of the preceding claims 8 to 10, **characterized in**
**in that** the alphanumeric messages (40, 50) of the second message format have a header (48) which contains the additional information, security information and/or the control information.

12. Paging arrangement according to anyone of the preceding claims, **characterized in that**
the messages (30, 40, 50) of the paging arrangement (100) are transmitted according to a time slot method in predefined codeword groups (34, 44), each codeword group (34, 44) having a predefined number of frames (43, 33), wherein
the codeword groups (44) of the messages of the second message format comprise
a synchronization codeword (42);
eight frames (43) with two codewords each;
wherein
the first frame (F0) comprises the dedicated paging address (45) of the first address type and header information (H1);
the second frame (F1) comprises header information (H2, H3); and
the third to eighth frames (F2-F7) are provided for the paging addresses (81) of the second address type and the common message text (47) for the paging addresses of the second address type.

13. Paging arrangement according to claim 12, **characterized in that** the paging arrangement is configured to transmit the first and second frames (F0, F1) in plain text and to transmit the third to eighth frames (F2-F7) in encrypted form.

14. Method for transmitting messages from a paging center to a plurality of paging receivers of a paging arrangement in accordance with a paging protocol, wherein
the paging protocol is provided for sending alphanumeric messages of a first message format; and
each alphanumeric message of the first message format comprises a paging address according to a first address type and a message part with a message text;
**characterized by** the step of:
transmitting alphanumeric messages of a second message format, wherein the alphanumeric messages of the second message format comprise:
a dedicated paging address of the first address type, which marks the alphanumeric messages of the second message format;
a plurality of paging addresses of a second address type; and
a common message text for the plurality of paging addresses of the second address type, the respective alphanumeric message of the second message format and the common message text contained in the respective alphanumeric message of the second message format being transmitted in a single transmission to the plurality of paging addresses of the second address type.

15. Paging receiver for receiving messages alert messages from a paging center according to a paging protocol, wherein
the paging protocol is provided for transmitting alphanumeric messages of a first message format; and
each alphanumeric message of the first message format comprises a paging address according to a first address type and a message part with a message text;
**characterized in that**
the paging receiver is configured to receive alphanumeric messages of a second message format, the alphanumeric messages of the second message format comprising
a dedicated paging address of the first address type, which marks the alphanumeric messages of the second message format;
a plurality of paging addresses of a second address type; and
a common message text for the plurality of paging addresses of the second address type, wherein the paging center is configured to transmit the respective alphanumeric message of the second message format and the common message text contained in the respective alphanumeric message of the second message format in a single transmission to the plurality of paging addresses of the second address type.

## Revendications

1. Agencement d'appel radio (100) pour la transmission de messages d'une centrale d'appel radio à une pluralité de récepteurs radio (10) selon un protocole d'appel radio, par exemple le protocole POCSAG, dans lequel
le protocole d'appel radio est prévu pour l'envoi de messages alphanumériques (30) d'un premier format de message ; et
chaque message alphanumérique (30) du premier format de message comporte une adresse d'appel radio (35) selon un premier type d'adresse et une partie de message (36) avec un texte de message ;
**caractérisé en ce que**
l'agencement d'appel radio (100) est configuré pour transmettre des messages alphanumériques (40, 50) d'un deuxième format de message depuis la centrale d'appel radio vers la pluralité de récepteurs d'appel radio, les messages alphanumériques (40, 50) du deuxième format de message comportant :
une adresse d'appel radio dédiée (45) du premier type d'adresse du premier format de message spécifié par le protocole d'appel radio, qui marque les messages alphanumériques (40, 50) du deuxième format de message pour les récepteurs radio en tant qu'adresse de marque ;
plusieurs adresses d'appel radio (81) d'un deuxième type d'adresse ; et
un texte de message commun (47) pour les multiples adresses d'appel radio (81) du deuxième type d'adresse,
dans lequel l'adresse d'appel radio (1a) dédiée du premier type d'adresse et les multiples adresses d'appel radio du deuxième type d'adresse sont disposées, du point de vue du protocole d'appel radio dans la partie message des messages alphanumériques du premier format de message, et
dans lequel l'agencement d'appel radio est configuré pour émettre le message alphanumérique respectif du deuxième format de message et le texte de message commun contenu dans le message alphanumérique respectif du deuxième format de message pour un adressage de groupe dans une seule transmission vers les multiples adresses d'appel radio du deuxième type d'adresse.

2. Agencement d'appel radio selon la revendication 1, **caractérisé en ce que**
le protocole d'appel radio est le protocole POCSAG ; et
l'adresse d'appel radio dédiée (45) du premier type d'adresse est un mot de code d'adresse selon le protocole POCSAG.

3. Agencement d'appel radio selon l'une des revendications précédentes, **caractérisé en ce que** l'agencement d'appel radio (100) est configuré pour crypter le texte de message (47) des messages alphanumériques (40, 50) du deuxième format de message.

4. Agencement d'appel radio selon l'une des revendications précédentes, **caractérisé en ce que** l'agencement d'appel radio (100) est configuré pour crypter les adresses d'appel radio (81) du deuxième type d'adresse.

5. Agencement d'appel radio selon la revendication 4, **caractérisé en ce que**
les récepteurs d'appel radio (10) sont configurés pour enregistrer un jeu de clés comprenant une ou plusieurs clés électroniques numérotées (60) du dispositif d'appel radio ; et
que les messages alphanumériques (40, 50) du deuxième format de message comprennent un numéro de clé de la clé électronique (60) nécessaire au décryptage.

6. Agencement d'appel radio selon la revendication 4, **caractérisé en ce que** l'adresse d'appel radio dédiée (45) du premier type d'adresse est reliée à un numéro de clé de la clé électronique (60) nécessaire au décryptage.

7. Agencement d'appel radio selon l'une des revendications précédentes, **caractérisé en ce que** l'agencement d'appel radio (100) est configuré pour protéger l'authenticité et/ou l'intégrité du texte du message et des adresses d'appel radio du deuxième type d'adresse à l'aide d'un ou plusieurs procédés cryptographiques.

8. Agencement d'appel radio selon l'une des revendications précédentes, **caractérisé en ce que** les messages alphanumériques (40, 50) du deuxième format de message contiennent des informations supplémentaires, les informations supplémentaires comprenant le nombre et/ou la position des adresses d'appel radio (81) du deuxième type d'adresse contenues dans le message alphanumérique (40, 50) correspondant du deuxième format de message.

9. Agencement d'appel radio selon l'une des revendications précédentes, **caractérisé en ce que** les messages alphanumériques (40, 50) du deuxième format de message comportent des informations de sécurité, les informations de sécurité comprenant
un vecteur d'initialisation ;
une signature numérique ;
un code d'authentification de message (MAC) ;
un index de clé ; et/ou
un horodatage.

10. Agencement d'appel radio selon l'une des revendications précédentes, **caractérisé en ce que** les messages alphanumériques (40, 50) du deuxième format de message comportent des informations de commande, les informations de commande comprenant :
une alarme avec un signal sonore ;
une alarme silencieuse ;
une activation d'un module de téléphonie mobile ;
une activation d'un module GPS ; et/ou
un affichage abrégé du texte du message.

11. Agencement d'appel radio selon l'une des revendications 8 à 10 précédentes, **caractérisé en ce que**
les messages alphanumériques (40, 50) du deuxième format de message comportent un en-tête (48) qui contient les informations supplémentaires, les informations de sécurité et/ou les informations de commande.

12. Agencement d'appel radio selon l'une des revendications précédentes, **caractérisé en ce que**
les messages (30, 40, 50) de l'agencement d'appel radio (100) sont transmis selon un procédé à intervalles de temps dans des groupes de mots de code prédéfinis (34, 44), chaque groupe de mots de code (34, 44) comportant un nombre prédéfini de trames (43, 33), dans lequel
les groupes de mots de code (44) des messages du deuxième format de message comportent :
un mot de code de synchronisation (42) ;
huit trames (43) comportant chacune deux mots de code ;
la première trame (F0) comportant l'adresse d'appel radio dédiée (45) du premier type d'adresse et des informations d'en-tête (H1) ;
la deuxième trame (F1) comporte des informations d'en-tête (H2, H3) ; et
les troisième à huitième trames (F2-F7) sont prévues pour les adresses d'appel radio (81) du deuxième type d'adresse et le texte de message commun (47) pour les adresses d'appel radio du deuxième type d'adresse.

13. Agencement d'appel radio selon la revendication 12, **caractérisé en ce que** l'agencement d'appel radio est configuré pour envoyer les première et deuxième trames (F0, F1) en texte clair et pour envoyer les troisième à huitième trames (F2-F7) sous forme cryptée.

14. Procédé de transmission de messages d'une centrale d'appel radio à plusieurs récepteurs d'alarme radio d'un agencement d'appel radio selon un protocole d'appel radio, dans lequel
le protocole d'appel radio est prévu pour l'envoi de messages alphanumériques d'un premier format de message ; et
chaque message alphanumérique du premier format de message comporte une adresse d'appel radio selon un premier type d'adresse et une partie de message avec un texte de message ;
**caractérisé par** l'étape suivante :
transmettre des messages alphanumériques d'un deuxième format de message, les messages alphanumériques du deuxième format de message comportant :
une adresse d'appel radio dédiée du premier type d'adresse, qui marque les messages alphanumériques du deuxième format de message ;
plusieurs adresses d'appel radio d'un deuxième type d'adresse ; et
un texte de message commun pour les multiples adresses d'appel radio du deuxième type d'adresse ; dans lequel le message alphanumérique respectif du deuxième format de message et le texte de message commun contenu dans le message alphanumérique respectif du deuxième format de message sont émis dans une seule transmission aux multiples adresses d'appel radio du deuxième type d'adresse.

15. Récepteur d'alarme radio pour la réception de messages d'alerte provenant d'une centrale d'appel radio selon un protocole d'appel radio, dans lequel
le protocole d'appel radio est prévu pour l'émission de messages alphanumériques d'un premier format de message ; et
chaque message alphanumérique du premier format de message comporte une adresse d'appel radio selon un premier type d'adresse et une partie de message avec un texte de message ;
**caractérisé en ce que**
le récepteur d'alarme radio est configuré pour recevoir des messages alphanumériques d'un deuxième format de message, les messages alphanumériques du deuxième format de message comportant :
une adresse d'appel radio dédiée du premier type d'adresse qui marque les messages alphanumériques du deuxième format de message ;
plusieurs adresses d'appel radio d'un deuxième type d'adresse ; et
un texte de message commun pour les multiples adresses d'appel radio du deuxième type d'adresse, dans lequel le dispositif d'appel radio est configuré pour émettre le message alphanumérique respectif du deuxième format de message et le texte de message commun contenu dans le message alphanumérique respectif du deuxième format de message en une seule transmission aux multiples adresses d'appel radio du deuxième type d'adresse.
